# EUROPEAN PATENT APPLICATION

(11) **EP 2 120 213 A2**
(43) Date of publication of application: **18.11.2009**
(21) Application number: 09251298.7
(22) Date of filing: 12.05.2009
(51) Int. Cl.: G07C 3/00

(54) **Safety equipment**

(30) Priority: 13.05.2008 GB 0808606
(71) Applicant: Grummett, Ian Stewart, Wombwell, Barnsley S73 0EE (GB)
(72) Inventor: Grummett, Ian Stewart, Wombwell, Barnsley S73 0EE (GB)
(74) Representative: Chapman, Paul Nicholas

(57) **Abstract**

A method of monitoring safety helmets (101, 102, 103, 104) comprising several steps. A unique identifier (201) is provided on each of a plurality of safety helmets, and the unique identifiers are stored in a database. A plurality of the helmets are inspected and the unique identifier is read for each of the inspected helmets. For each inspected helmet, the date of inspection is stored in the database with reference to the respective unique identifier, and for each inspected helmet, a period from the date of its inspection to the present time is monitored. Helmets for which the period exceeds a predetermined period are subsequently identified and for those helmets the steps of inspection, identifier reading, and storage of date of inspection with reference to the identifier are repeated.

## Description

### Safety Equipment

This application claims priority from United Kingdom Patent Application No. 08 08 606.8, filed 13 May 2008, the whole contents of which are incorporated herein by reference in their entirety.

### BACKGROUND OF THE INVENTION

### 1. Field of the Invention

The present invention relates to safety equipment and a method of monitoring helmets.

### 2. Description of the Related Art

It is known for helmets used by construction workers to be moulded from a plastics material, and for a date of manufacture to be indicated on the helmet during manufacture. It is also known to withdraw such a helmet from further use after a predefined period from its date of manufacture.

### BRIEF SUMMARY OF THE INVENTION

According to a first aspect of the present invention, there is provided a method of monitoring safety helmets as defined by claim1.

According to a second aspect of the present invention, there is provided safety equipment as defined by claim 10.

### BRIEF DESCRIPTION OF THE SEVERAL VIEWS OF THE DRAWINGS

Figure 1 shows safety equipment embodying the present invention;
Figure 2 shows a table illustrating data stored in a database on computer system 109;
Figure 3 shows a graphical user interface 301 displayed by the monitor 115 of the computer 109;
Figure 4 shows a process 401 performed by computer 109 to monitor the current status of all helmets in the database;
Figure 5 shows a flowchart of a process, "new helmet processing" 501, performed by the computer system 109;
Figure 6 shows a flowchart illustrating a helmet issuance process 600;
Figure 7 shows a flowchart outlining an audit procedure 700;
Figure 8 shows a flowchart of the process steps performed by computing system 109 at step 701 of the audit procedure;
Figure 9 shows a flowchart of the step 703 of the audit procedure; and
Figure 10 shows a flowchart illustrating a spot check procedure 1000.

### DESCRIPTION OF THE BEST MODE FOR CARRYING OUT THE INVENTION

### Figure 1

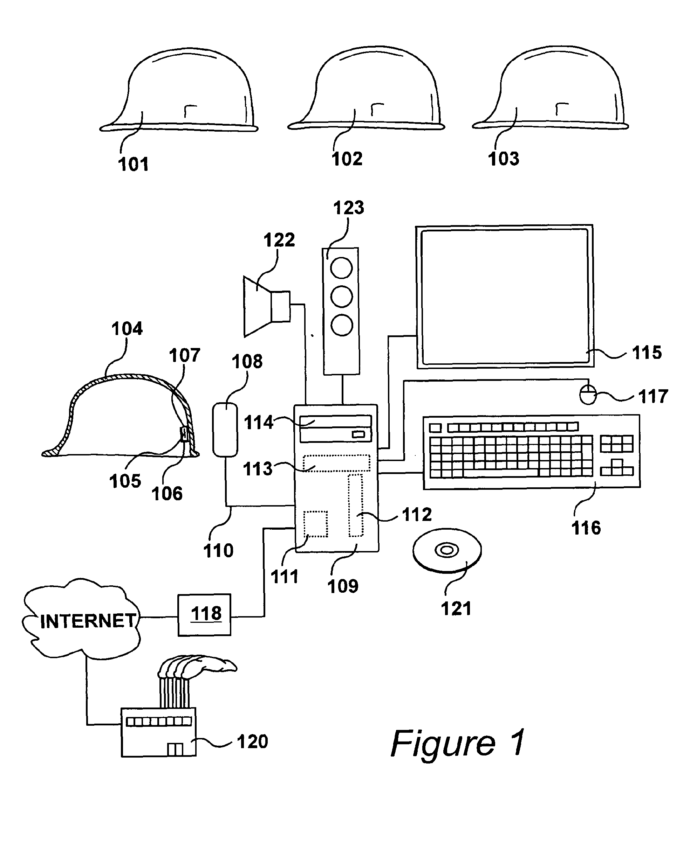

Safety equipment embodying the present invention is shown in Figure 1. The safety equipment includes several items 101, 102, 103, 104 of safety equipment in the form of safety helmets of a type worn by construction workers. However, unlike conventional helmets of this type, each helmet 101 to 104 contains a respective object 105 configured to provide a unique identifier under interrogation. The objects in the present embodiment are RFID devices (radio frequency identification devices). When manufactured, each helmet 101 to 104 is moulded such that it includes an integral pocket 106 on the interior rear wall of the helmet. The objects 105 are then potted within the pockets 106 using a suitable compound 107, such as an epoxy resin. Helmet 104 is shown in cross-section in Figure 1 to illustrate the location of the pocket 106 and object 105.

The safety equipment also comprises reading apparatus, in the form of RFID reader 108, for reading the unique identifier of each of the helmets, and a data processing system in the form of a personal computer 109. In the present case, the RFID reader communicates with the computer 109 via a wired connection 110. Thus, when the RFID reader is used to interrogate RFID devices in helmets, such as helmet 104, the unique identifier provided by the device is communicated to the computer 109.

The computer 109 itself comprises conventional components including a central processing unit 111, random access memory 112, a hard drive 113 and a CD-ROM drive 114. The computer 109 also has a conventional monitor (or video display unit) 115 and input devices including a keyboard 116 and a mouse 117. The input devices 116, 117 allow a user of the computer system 109 to enter information into the system relating to the unique identifier of the helmet. In particular, the structural integrity of the helmet may be inspected by a person trained for such a task, and on completion of the inspection, information relating to the inspection may be inputted into the system and stored in a database stored on the hard drive 113.

In the present embodiment, the computer 109 is connected to the internet via a modem 118, and therefore it is possible to download information relating to the manufacture of the helmets 101 to 104 from their manufacturer 120 via the internet. Alternatively, such information is dispatched on a CD-ROM 121, or similar computer readable storage device, along with the helmets. It will be understood that the purchaser, and new owner, of the helmets may obtain hundreds of helmets at a time, and just four helmets are illustrated in the present example for simplicity and clarity. In cases where large quantities of helmets are obtained, and information relating to their manufacture is to be entered on the system 109, it is particularly advantageous to have the facility to obtain such data by downloading or by reading from a storage device 121.

In the present embodiment, the computer system 109 is provided with a loudspeaker 122 and LED (light emitting diode) array 123. The LED array and speaker are used by the computer 109 to provide clear audio and visual alarm signals during operation relating to the monitoring of helmets, such as helmets 101 to 104. Such alarm signals will be further described below.

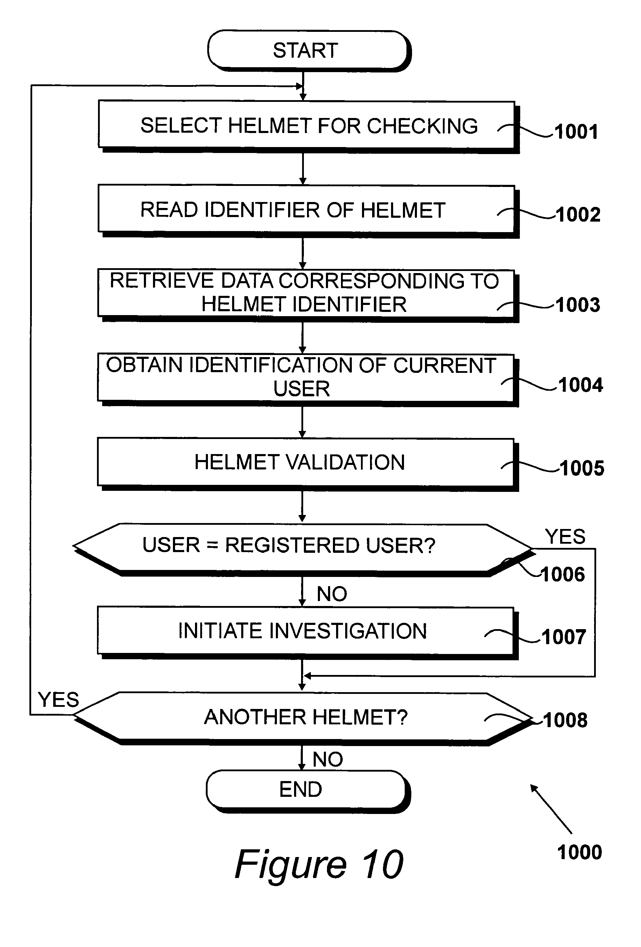

It may be noted that, for the sake of simplicity, the computer system 109 comprises a single personal computer. However, it will be understood that the processes performed by the computer system may be distributed over several computers that are in communication with one another over a network. In particular, in cases where helmets are to be inspected on a building site, for example as described below with reference to Figure 10, it may be advantageous to have a relatively light mobile computer with an associated RFID reader in communication over a radio network with a second computer containing the database.

In the present embodiment, the objects are RFID devices, but in other embodiments other objects configured to provide a unique identifier under interrogation are used. In some such embodiments, the objects (105) are labels displaying a unique barcode, and a barcode-reader is used to interrogate the barcodes to determine the unique identifier defined by the barcode. In one embodiment, the barcode is a two-dimensional barcode. The label displaying the barcode is preferably located within the helmet to prevent it being damaged during use.

### Figure 2

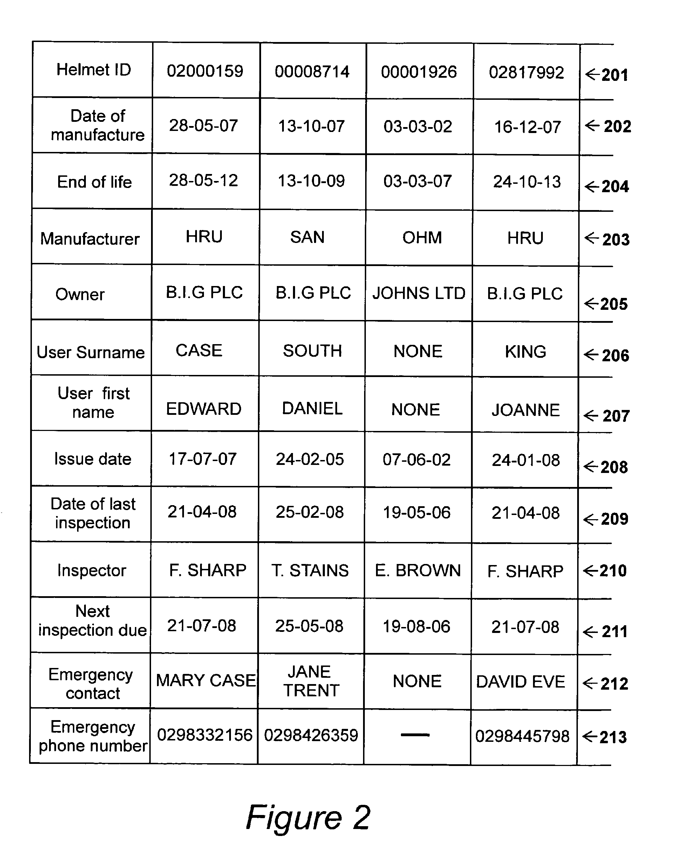

A table illustrating data stored in a database on computer system 109 is shown in Figure 2. The database includes the unique identifier 201 of each helmet being monitored, a date of manufacture 202 for each helmet and the identity of the manufacturer 203. In addition, in accordance with current requirements, the helmets monitored by the system are to be disposed of after five years from their date of manufacture. Consequently, the database also contains, for each helmet, a recall date referred to in the table as "End of life" 204 after which the helmet should no longer be used. It is envisaged that the date of manufacture and identity of manufacturer is information that may be either downloaded over the internet from the manufacturer or received with new helmets on a CD-ROM.

The database also includes the owner 205 of each helmet, the surname 206 and first name 207 of the user of the helmet and the date 208 on which the helmet was issued to that user.

Helmets are currently worn by construction workers and the like without any independent monitoring of the condition of the helmet. However, in the method of the present invention, an inspector periodically inspects the monitored helmets. Consequently, the database also contains for each helmet a date 209 when it was last inspected, the identity of the inspector 210 and the date 211 when the next inspection will become due.

It may be noted that, because the objects provide a unique identifier that corresponds with an identifier stored in the database, the inspector of helmets is able to positively identify each helmet that they inspect, and view the helmet's history on the computer's display 115.

### Figure 3

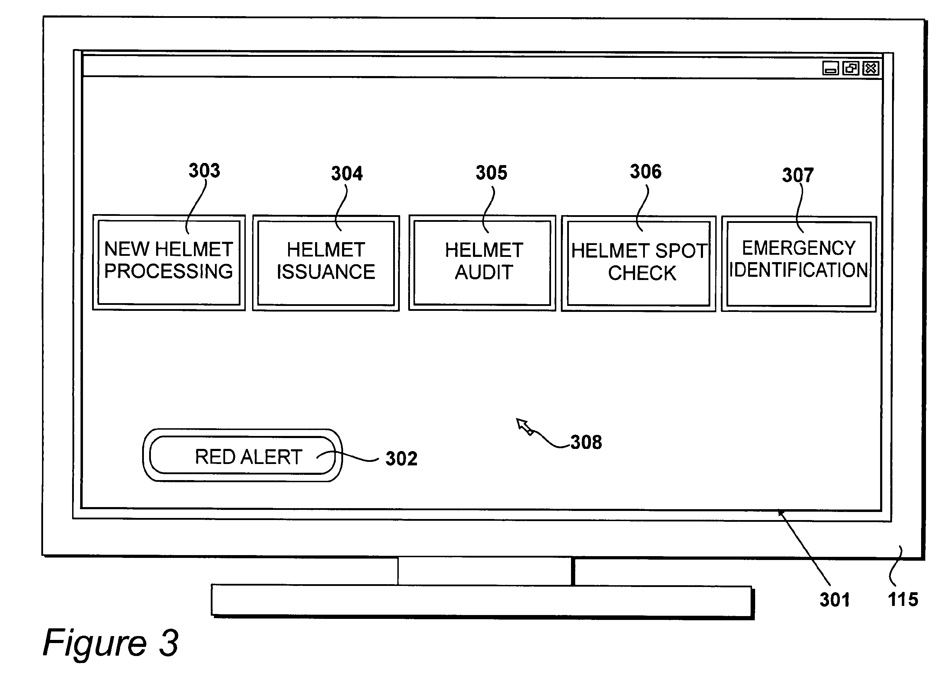

A graphical user interface 301 provided by the monitor 115 of the computer 109 is shown in Figure 3.

The computer system 109 includes a real-time clock, and software for monitoring periods from the date of inspection of each monitored helmet to the present time. In addition, operating under the instructions of the software, the computer 109 monitors the period from the date of manufacture to the present day for each monitored helmet. If a helmet is found to require immediate inspection or disposal due to reaching the end of its life, the computer generates an alert. The alert in the present example comprises displaying a symbol 302 on the display 115, illuminating an LED of the array 123 and sounding an aural alarm via loudspeaker 122.

The graphical user interface 301 also provides a graphical representation 303, 304, 305, 306, 307 of routines that the computer is able to perform when selected, for example by mouse cursor 308. Thus, the user is able to provide an input to the computer such that it performs "new helmet processing", "helmet issuance", "helmet audit", "helmet spot check" or "emergency identification".

"New helmet processing" is performed when details of helmets not currently on the database are to be added.

"Helmet issuance" is performed when a helmet is to be issued to a new user, and allows further details relating to the issued helmet to be added to the database.

"Helmet spot check" is performed during an on the spot check of helmets currently being worn by users.

The use of these routines will be further described below.

The database primarily contains information relating to the items of safety equipment, i.e. in this case the helmets. However, as the database also contains information relating to the users of the helmets, it may also be useful when a helmet's user is the subject of an accident. For example, if a helmet user has an accident, such as a fall, and becomes unconscious, the RFID device in the helmet may be interrogated by an RFID reader such as reader 108. The "emergency identification" routine receives the unique identifier obtained from the RFID device, retrieves corresponding data from the database and displays the name of the helmet user, along with details of their emergency contact.

### Figure 4

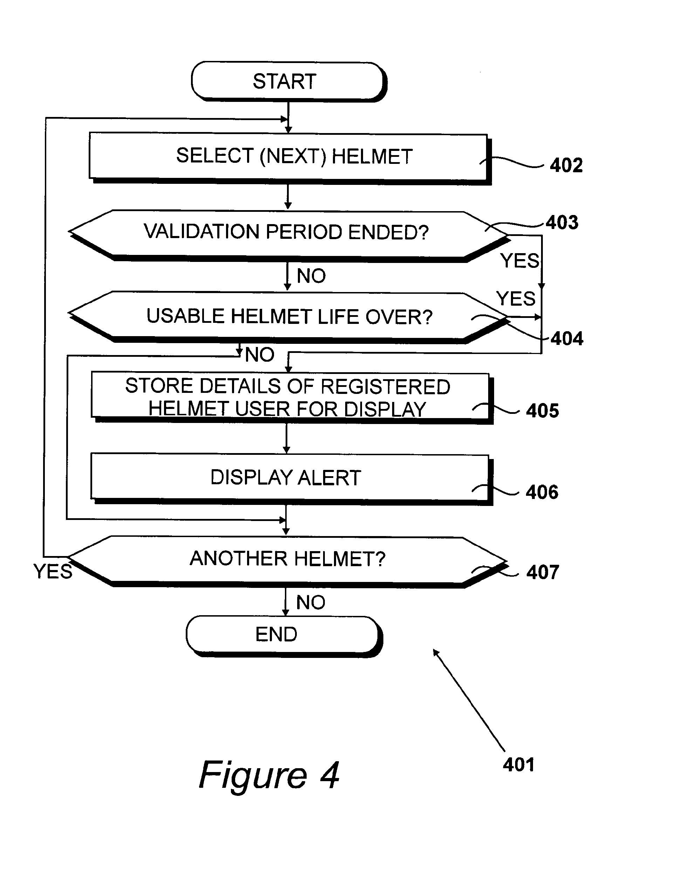

A process 401 performed by computer 109 to monitor the current status of all helmets in the database is shown in Figure 4. The process 401 is performed daily and reviews the status of each helmet in turn. Thus at the start of the process the first helmet is selected from the database at step 402. At step 403 it is determined whether the helmet is still within the validation period following its last inspection. That is, it is determined whether the date of next inspection for the helmet is today or already passed. If it is determined that the validation period has ended, then at step 405 the details of the helmet are stored for later display, and at step 406 an alarm is generated. (Thus, for example, the "red alert" is displayed on monitor 115, an LED of array 123 is illuminated and an audible alarm is periodically sounded.) The process then enters step 407.

Alternatively, if at step 403 it is determined that the helmet is still within a validation period following its most recent inspection, the process enters step 404 where it is determined whether the helmet life has reached the end of its usable period. That is, the process determines if today's date is more than a predetermined period, such as five years, after the date of manufacture. This may be determined with reference to the stored date of manufacture 202 or the "End of life" date 203 for the helmet. If the helmet has reached the end of its usable period the process enters step 405 where the details of the helmet are stored for later display before an alert is displayed at step 406. The process then enters step 407. If, at step 404, the helmet is found to be within its usable period, then the process enters step 407 directly.

At step 407 it is determined whether other helmets in the database are still to be assessed, and if so then the next helmet is selected at step 402 and steps 403 to 406 are performed as is appropriate. When it is determined, at step 407, that the status of all helmets in the database has been assessed then the process 401 ends.

In cases where that process 401 has issued a red alert, it is then possible for the user of the computer system 109 to discover the helmets that are no longer valid. On receipt of an appropriate input from the user, such as by using the mouse cursor 308 to click on the red alert symbol 302, the computer displays a list of unique identifiers relating to the helmets that have been identified as either being outside of their validation period or at the end of their usable life. Other information may also be displayed along with the unique identifier, such as the name of the owner 205 and user 207, 208 so that the helmet may be located and either inspected and/or disposed of.

### Figure 5

When new helmets are to be added to the database, possibly because a new batch of helmets has been bought by a company subscribing to the monitoring system, the user of computer system 109 provides an input to the computer to indicate that new helmet processing is required.

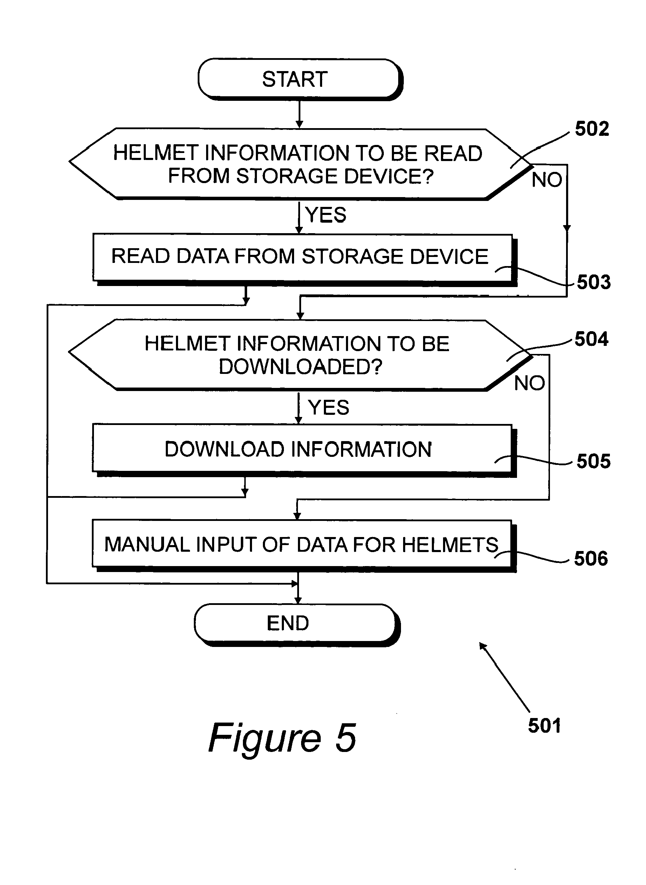

On receipt of a user-input that new helmet processing (303) is required, the computer performs a process 501 as shown in the flowchart of Figure 5. Firstly at step 502 the computer firstly receives an input from the user indicating whether the information relating to the new helmets has already been stored on a data storage device such as CD-ROM 121. If so, then the data is read from the device at step 503 and the process 501 ends. Alternatively, the process enters step 504 where the computer receives a user-input indicating whether information relating to the new helmets is to be downloaded. If so, the information is downloaded at step 505 before the process 501 ends.

As a final alternative, information relating to the new helmets is manually input at step 506. This step involves, for each helmet, reading the unique identifier 201 using reading apparatus 108, and entering basic information relating to the helmet. The basic information includes date of manufacture 202 and name of the manufacturer 204. Such information may be provided to the purchaser of the helmets as printed text, but alternatively, at least an approximate date of manufacture may be obtained from a date stamp moulded into the helmet at the time of its manufacture.

### Figure 6

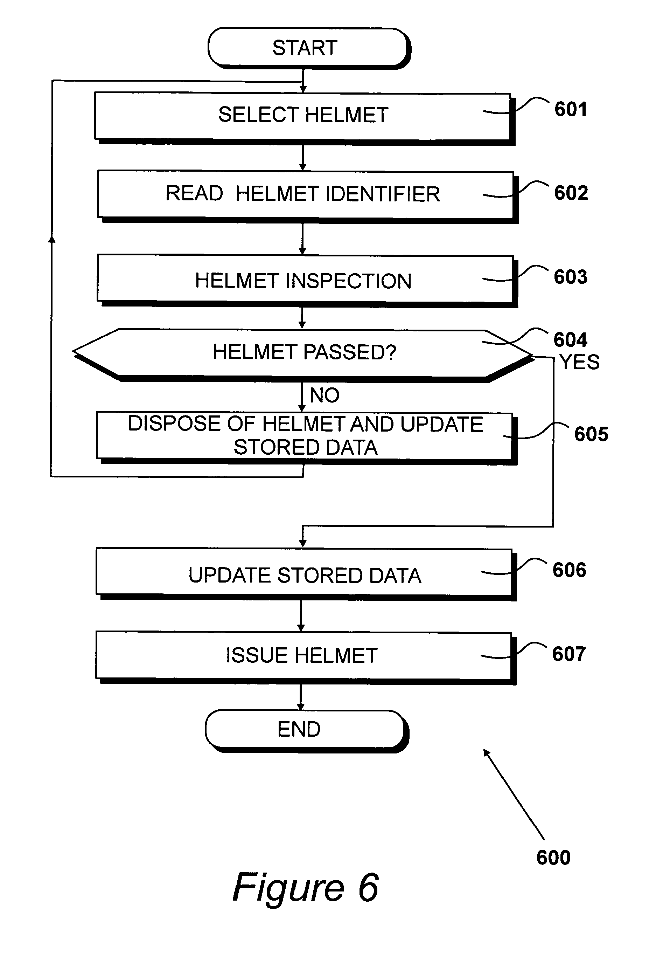

Once the basic information of a helmet has been inputted into the database at step 501, the helmet may be issued to a person requiring the use of a new helmet. However, a helmet issuance process is performed at least partly by a helmet inspector before the helmets new user is able to use the helmet. The helmet issuance process 600 is shown in Figure 6.

Firstly, a helmet is selected for issuance a step 601. The helmet identifier is read using reading apparatus 108 at step 602 and the helmet is inspected for defects at step 603. The helmet inspection includes visual inspection for defects such as indentations, abrasions, cracks, discoloration, damage to webbing, etc.

Following inspection, if it is determined at step 604 that the helmet failed the inspection then the helmet is disposed of at step 605, the database is updated accordingly and the steps 601 to 604 are repeated with a different helmet.

When the outcome of the inspection is positive, the database is updated at step 606. This is performed by reading the unique identifier 201 using reading apparatus 108 and then manually entering appropriate information using input device 116, 117. For example, the inspection date 209, the date that the next inspection is due 211, the inspector's name 210 and the names 206, 207 of the new user of the helmet are entered into the database.

A helmet having passed its inspection is then issued at step 607.

### Figure 7

In order to provide an efficient monitoring system for items of safety equipment, the present method envisages performing a regular audit of helmets. During an audit, items that are about to come to the end of their validation period are inspected. For example, monitored helmets may be inspected as part of a three-monthly audit, but the inspection may take place within a specified period, such as two weeks, at the end of the three-month validation period following an inspection.

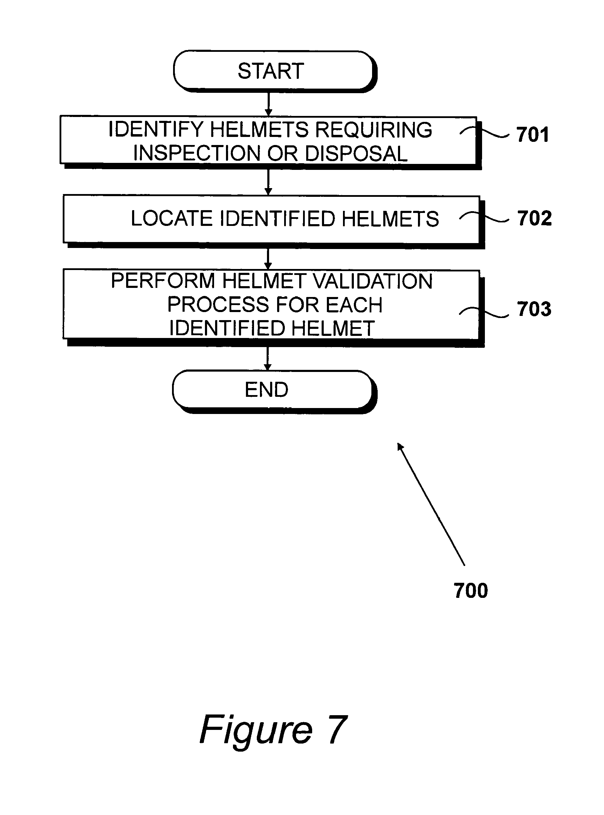

The outline of the audit procedure 700 is shown in the flowchart of Figure 7.

Firstly, at step 701 a user of computer system 109 provides an input indicating that helmet audit (305) is to be performed. In response, helmets are identified by the computer system 109 that require inspection or, in the case of old helmets, disposal.

At step 702 the helmets identified at step 702 are located using information received from the computer's database. A validation process is then performed at step 703 for each identified helmet.

### Figure 8

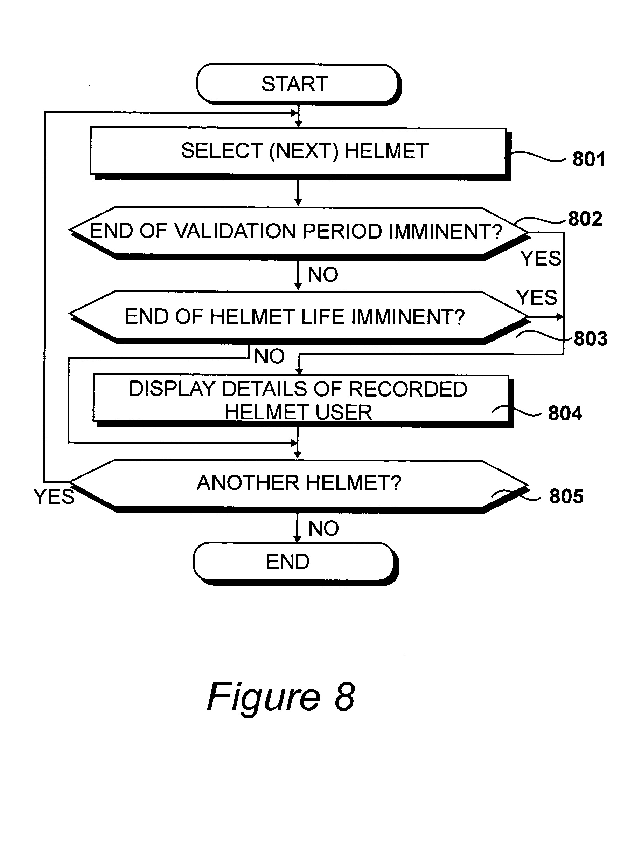

The process steps performed by computing system 109 at step 701 are shown in the flowchart of Figure 8.

At step 801 the first helmet in the database is selected, and at step 802 it is determined if the end of the helmet's validation period is imminent. If the validation period has ended, or is about to end, then details of the helmet and the helmet's user are displayed at step 804 before step 805 is entered.

If the end of the validation period is not imminent, it is determined at step 803 if the end of the helmet's usable life is imminent. For example, the monitoring system for the purposes of safety and efficiency may be designed to retire helmets that are within a predetermined period from the end of their life. In one embodiment, this predetermined period is chosen to be equal to the period between audits.

If the end of the helmet's life is found to be imminent at step 803 then details of the helmet and its user are displayed at step 804, before step 805 is entered. Alternatively, step 805 is entered directly where it is determined whether there is another helmet whose status is to be assessed, and if so step 801 is entered where details of the next helmet are retrieved and steps 802 to 805 are repeated as is applicable.

Steps 801 to 805 are repeatedly performed until all helmets in the database have been assessed and details of all helmets to be inspected or disposed of have been displayed.

### Figure 9

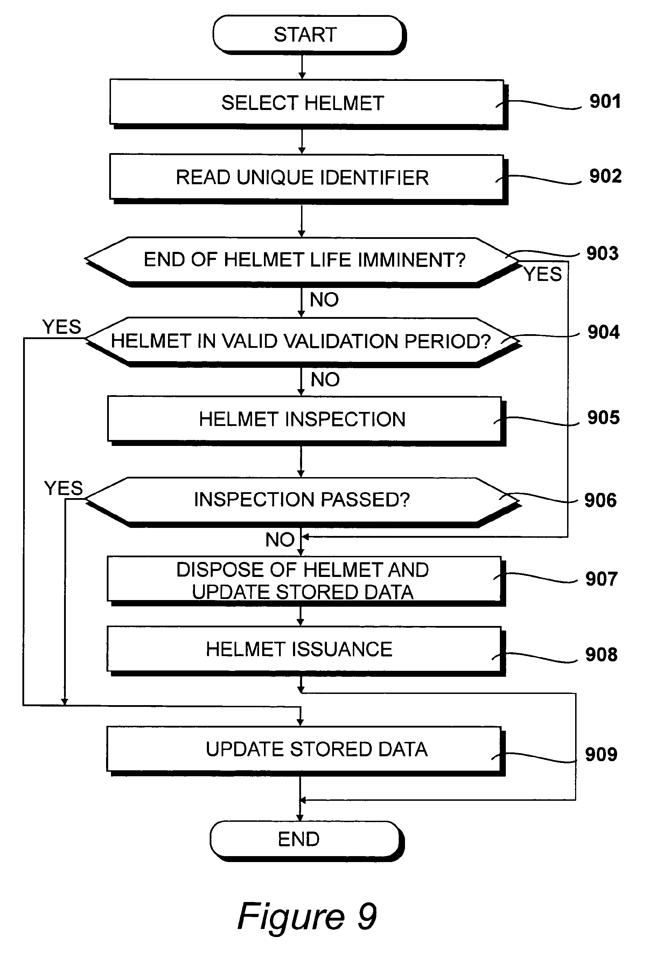

The step 703 of validating a helmet is shown in Figure 9. At step 901 a helmet awaiting validation is selected, for example by an inspector. At step 902 the unique identifier of the helmet is read using reading apparatus 108 and information relating to the helmet is retrieved from the database. At step 903 it is determined whether the end of the helmet life is imminent, and if so the helmet is disposed of and the database is updated at step 907. A replacement helmet is then issued at step 908, in accordance with procedure 600 described above, to replace the retired helmet.

Alternatively, if at step 903 it is determined that the end of the helmet's life is not imminent, it is determined whether the helmet is within a valid validation period at step 904, and if not then the helmet is inspected at step 905. If the helmet is found to pass the inspection then the database is updated at step 909 to complete validation for that helmet. The updated data includes the date of the current inspection 209, the inspector 210 and the date of the next inspection.

If the helmet does not pass its inspection at step 905 then it is disposed of at step 907 and the database updated to show that the helmet has been retired. A replacement helmet is then issued at step 908 in accordance with the above-described procedure 600.

### Figure 10

The above-described monitoring process will only be effective and efficient if the users of the helmets use the correct monitored helmet. For example, the whole monitoring procedure would become pointless if users used non-monitored helmets. In addition, the audit process would be hindered by users not wearing helmets that are specifically assigned to them. Consequently, the present monitoring method also includes a spot check procedure 1000 shown in the flowchart of Figure 10.

It is envisaged that the procedure will be performed at a suitable entrance to a construction site or other location where helmet users must pass by with their helmets.

To initialise the procedure 1000, the user of the computer system 109 provides an input, for example by clicking on graphical representation 306 (Figure 3), to indicate that a spot check is to be performed. At step 1001 a helmet is selected for checking, possibly by stopping the user as they enter the building site. The unique identifier of the helmet is read at step 1002 using reading apparatus 108, and data corresponding to the unique identifier is retrieved from the database. Identification is obtained directly from the wearer of the helmet at step 1004, this step may simply involve asking the wearer for their name or also asking the wearer for their signature.

At step 1005 the helmet is validated in accordance with the validation procedure described above with reference to Figure 9.

Following validation, it is determined whether the identification provided by the wearer matches that of the user as registered in the database. If there is not a match then an investigation may be initiated at step 1007 to determined why the incorrect helmet was being worn, where the user's monitored helmet is, etc. If necessary, a new helmet is issued so that the worker can continue work with a validated helmet.

Following step 1007 or step 1006, if the wearer is wearing the correct monitored helmet, the user of computer system 109 provides an input at step 1008 indicating either that a further helmet is to be, or is not to be checked. The steps 1001 to 1007 are then repeated for one or more other helmets as required.

## Claims

1. A method of monitoring safety helmets (101, 102, 103, 104) comprising the steps of:
(a) providing a unique identifier (201) on each of a plurality of safety helmets (101, 102, 103, 104);
(b) storing said unique identifiers in a database;
(c) inspecting a plurality of said safety helmets and reading the unique identifier of each of the inspected helmets;
(d) for each inspected helmet, storing the date of inspection in said database with reference to the respective unique identifier;
(e) for each inspected helmet, monitoring a period from the date of its inspection to the present time;
(f) identifying helmets for which said period exceeds a predetermined period and for those helmets repeating steps (c) to (e).

2. A method according to claim 1, wherein said step (a) comprises attaching to each of a plurality of safety helmets an object (105) configured to provide said unique identifier under interrogation.

3. A method according to claim 1 or claim 2, wherein said safety helmets are provided with a pocket, and said step (a) comprises locating within the pocket of each of a plurality of safety helmets a respective object configured to provide said unique identifier under interrogation.

4. A method according to claim 2 or claim 3, wherein each said object (105) is a radio frequency identification (RFID) device.

5. A method according to any one of claims 1 to 4, wherein said method further comprises the steps of:
for each said safety helmet, storing at least one of (a) a date of manufacture of the helmet and (b) a recall date calculated from the date of manufacture of the helmet; and
identifying a safety helmet for which a recall date has passed.

6. A method according to claim 5, wherein said method further comprises the step of generating an alarm indicating that a helmet has been identified for which a recall date has passed.

7. A method according to claim 6, wherein said step of storing at least one of (a) a date of manufacture and (b) a recall date comprises at least one of (i) reading data from a computer readable device (121) and (ii) downloading data.

8. A method according to any one of claims 1 to 7, wherein each said safety helmet has a validation period of defined duration following its most recent inspection, and said helmets are identified at step (f) before the expiration of said validation period.

9. A method according any one of claims 1 to 8, wherein each said safety helmet has a validation period of defined duration following its most recent inspection, and said method comprises performing a spot check to determine whether a selected sample of users of monitored helmets are currently using monitored helmets within their validation period, said spot check including reading unique identifiers from helmets being currently used by said sample of users, and retrieving stored data corresponding to the read unique identifiers.

10. A method according to any one of claims 1 to 9, wherein said method comprises performing a spot check to determine whether a selected sample of users of monitored helmets are currently using monitored helmets assigned to them, wherein said spot check includes reading unique identifiers from helmets being currently used by said sample of users, and retrieving data identifying corresponding registered users.

11. Safety equipment comprising:
a plurality of safety helmets (101, 102, 103, 104) , each of said helmets having an attached object (105) providing a unique identifier (201) under interrogation;
reading apparatus (108) for reading the unique identifier of each of said helmets; and
a data processing system (109) comprising storage means (113) storing said unique identifiers read by said reading apparatus, and input means (116, 117) for receiving indications that helmets relating to stored unique identifiers have been inspected,
wherein said data processing system (109) is configured to:
receive unique identifiers from said reading apparatus (108);
on receipt of an input indicating that a helmet has been inspected, store a date of inspection with reference to the respective unique identifier;
for each inspected helmet, monitor a period from the date of its inspection to the present time; and
identify helmets for which said period exceeds a predetermined period and for those helmets provide an output indicating that a further inspection is required.

12. Safety equipment according to claim 11, wherein said object (105) comprises a radio frequency identification device.

13. Safety equipment according to claim 11, wherein each said object comprises a barcode.

14. Safety equipment according to any one of claims 11 to 13, wherein said storage means stores for each said safety helmet at least one of: (a) a date of manufacture; and (b) a recall date determined from said date of manufacture, and
said processing means is configured to identify helmets for which a recall date has passed.

15. Safety equipment according to any one of claims 11 to 14, wherein said data processing system comprises at least one of: (i) a data reading means configured to read data from a computer readable medium; and (ii) means for downloading data over a network, and said data processing system is configured to store data containing at least one of: (a) a date of manufacture; and (b) a recall date for a plurality of said safety helmets.
